# EUROPÄISCHE PATENTSCHRIFT

(11) **EP 2 897 496 B1**
(45) Veröffentlichungstag und Bekanntmachung des Hinweises auf die Patenterteilung: **25.07.2018**
(21) Anmeldenummer: 13760019.3
(22) Anmeldetag: 06.09.2013
(51) Int. Cl.: A47C 7/74, B60N 2/56, B60N 2/00, B60R 21/015, B62J 33/00, B62J 1/00, B62J 27/00, G08B 25/01

(54) **ASSISTENZSYSTEM**
ASSISTANCE SYSTEM
SYSTEME D'ASSISTANCE

(30) Priorität: 24.09.2012 DE 102012217140
(43) Veröffentlichungstag der Anmeldung: 29.07.2015
(73) Patentinhaber: Bayerische Motoren Werke Aktiengesellschaft, 80809 München (DE)
(72) Erfinder: MEISSNER, Maximilian, 80807 München (DE); PURSCHWITZ, Arne, 80995 München (DE); RIETSCHEL, Udo, 81247 München (DE)
(86) Internationale Anmeldenummer: PCT/EP2013/068460
(87) Internationale Veröffentlichungsnummer: WO 2014/044554

(56) Entgegenhaltungen:
- EP-A2- 2 325 060
- WO-A1-95/21752
- WO-A1-2012/123444
- DE-A1- 10 223 366
- DE-A1-102006 041 448
- GB-A- 2 322 956
- US-A1- 2008 161 158
- US-A1- 2009 076 686
- BMWUR Admin: "BMW Motorcycle Technologies - ABS, RDC, ESA, and ASC", , 11. November 2010 (2010-11-11), XP002717626, Gefunden im Internet: URL:http://www.bmwurbanriders.com/profiles /blogs/bmw-motorcycle-technologies [gefunden am 2013-12-09]

## Beschreibung

Die Erfindung betrifft ein Assistenzsystem für ein Motorrad mit einer Sitzbelegungserkennungsvorrichtung.

Im Allgemeinen sind Sitzbelegungserkennungsvorrichtungen aus dem Automobilbereich bekannt, wohingegen sie bei Zweirädern bisher gar nicht zum Einsatz kommen. In der Automobilbranche werden Sitzbelegungserkennungsvorrichtungen eingesetzt, um beispielsweise zu überwachen, ob eine auf dem Sitz sitzende Person auch angeschnallt ist. Typischerweise weisen derartige Sitzbelegungserkennungsvorrichtungen einen Gewichtssensor auf, der der Sitzfläche zugeordnet ist. Bei Belegung der Sitzfläche durch eine Person wird der Gewichtssensor aufgrund des Gewichts der Person entsprechend ausgelöst. Nachteilig bei derartigen Sitzbelegungserkennungsvorrichtungen ist, dass zur Bereitstellung einer solchen Sitzbelegungserkennungsvorrichtung die benötigten Bauteile in den Sitz eingebracht werden müssen, wodurch sich der Konstruktionsaufwand erhöht. Ein weiterer Nachteil einer solchen Sitzbelegungserkennungsvorrichtung ist es, dass diese auch bei schweren Gegenständen anspricht, die auf dem Sitz abgelegt werden, da sie auf die Gewichtsmasse reagiert, die auf die entsprechende Sitzfläche wirkt.

Aus der WO 2012/123444 A1 ist eine Sitzbelegungserkennung bekannt, die einen Kondensator und eine Heizfunktion umfasst, wobei eine Sitzbelegung erkannt werden kann, ohne den Heizbetrieb zu unterbrechen.

In der DE 102 23 366 A1 ist eine Sitzbelegungserkennung bei einem Zweirad beschrieben, bei der eine Masse erfasst wird.

Die US 2008/0161158 A1 zeigt eine Steuerung, die unter anderem eine Sitzbelegung erkennt, indem ein Gewichtssensor eine Masse erfasst, die dauerhaft über einem vorbestimmten Schwellwert liegt.

Aus der US 2009/0076686 A1 ist eine Sitzbelegungserkennung bekannt, bei der die Gewichtsverteilung erfasst wird.

In der GB 2 322 956 A ist ein Antidiebstahlsystem bekannt, bei dem ebenfalls das Gewicht eines Gegenstands erfasst wird.

Die WO 95/21752 A1 zeigt eine Sitzbelegungserkennung, die eine Sitzheizung und eine Sitzbelegungserkennung ermöglicht.

Aus der EP 2 325 060 A2 ist eine Sitzbelegungserkennungsvorrichtung für ein Automobil bekannt, bei der ein Draht als Heizdraht einer Sitzheizung und als eine Elektrode für eine Sitzbelegungserkennung fungiert.

Aufgabe der Erfindung ist es, ein Assistenzsystem für ein Motorrad mit einer Sitzbelegungserkennungsvorrichtung zu schaffen, die die Sitzbelegung durch eine Person sicher erkennt.

Die Aufgabe wird gelöst durch ein erfindungsgemäßes Assistenzsystem für ein Motorrad, mit einer Sitzbelegungserkennungsvorrichtung, mit wenigstens einer Elektrode eines Kondensators, die in einer Sitzfläche angeordnet und als ein Draht ausgeführt ist, einer mit dem Draht verbundenen Elektronikbaugruppe, die einen Funktionsgenerator zur Erzeugung eines elektrischen Signals und eine Auswerteeinheit aufweist, wobei das vom Funktionsgenerator erzeugte elektrische Signal durch Belegung der Sitzfläche veränderbar ist, wobei der Draht Teil einer Sitzheizung und ein Heizdraht ist und wobei der Heizdraht abwechselnd, vorzugsweise periodisch abwechselnd, mit einem Heizstrom beaufschlagt ist und als Elektrode des Kondensators fungiert, wobei eine elektronische Steuerung vorgesehen ist, die aus elektrischen Signalen der Sitzbelegungserkennungsvorrichtung ermittelt, ob die Sitzfläche belegt ist, wobei die elektronische Steuerung abhängig von der Belegung der Sitzfläche eine Assistenzeinheit aktiviert oder deaktiviert, wobei die Assistenzeinheit eine Fahrwerksassistenzeinheit und/oder eine Notrufeinheit ist.

Der Grundgedanke der Erfindung ist es, die Sitzbelegung durch eine Person wirkungsvoll zu erkennen, indem die kapazitiven Eigenschaften einer die Sitzfläche belegenden Person sowie die Parasitärkapazität des Drahts ausgenutzt werden. Die Belegung der Sitzfläche durch eine Person entspricht dem Zuschalten eines Kondensators zu dem elektrischen Stromkreis, wodurch sich das von dem Funktionsgenerator generierte elektrische Signal entsprechend ändert. Die Person, die die Sitzfläche belegt, ist demnach die Gegenelektrode zu dem Draht, wodurch der Kondensator gebildet ist. Die Elektrode dieses Kondensators ist der Draht und die Gegenelektrode ist über die Person durch die Masse (Bezugspotenzial) des Kraftfahrzeugs definiert. Die Gegenelektrode kann demnach beispielsweise durch Kontakt des Kraftfahrzeugrahmens mit dem Fuß oder ähnlichem hergestellt werden. Ferner muss kein zusätzlicher Draht für die Sitzbelegungserkennungsvorrichtung aufwendig in die Sitzfläche eingebracht werden. Zudem ist der Draht einer Sitzheizung nah an der Sitzfläche angeordnet, wodurch das Detektionsfeld der Elektrode ungestörter ist. Durch die abwechselnden Funktionen des Heizdrahts ist gewährleistet, dass die Sitzbelegungserkennungsvorrichtung einerseits und die Sitzheizung andererseits nebeneinander wirkungsvoll funktionieren, sodass eine entsprechend ausreichende Sitzflächenerwärmung bereitgestellt wird und die Sitzbelegungserkennungsvorrichtung auch bei eingeschalteter Sitzheizung zur Verfügung steht.

Mithilfe der Sitzbelegungserkennungsvorrichtung kann somit das Kraftfahrzeug beziehungsweise eine Assistenzeinheit des Kraftfahrzeugs entsprechend gesteuert werden, sodass sich das Kraftfahrzeug besser kontrollieren lässt oder Hilfssysteme unterstützend eingreifen können.

Die elektronische Steuerung kann den als MOSFET ausgeführten Schalter entsprechend schalten, sodass dieser den Stromfluss durch den Draht aufgrund der Ansteuerung durch die elektronische Schaltung unterbricht.

Die Fahrwerksassistenzeinheit kann durch die Erkennung einer doppelten Sitzbelegung, beispielsweise bei einem Motorrad durch die Fahrer- und Soziussitzfläche, das Fahrwerk entsprechend einstellen. Dabei kann es sich bei der Fahrwerksassistenzeinheit um das ESA-System handeln.

Die Notrufeinheit kann ausgelöst werden, wenn während der Fahrt die Sitzbelegungserkennungsvorrichtung erkennt, dass eine zuvor belegte Sitzfläche nicht mehr belegt ist. Bei einem Motorrad würde dies bedeuten, dass der Fahrer und/oder der Sozius sich während der Fahrt von der Sitzfläche gelöst haben.

Insbesondere ist ferner die Elektronikbaugruppe ebenfalls Teil der Sitzheizung, wodurch keine weiteren elektronischen Komponenten verbaut werden müssen, sofern eine Sitzheizung vorhanden ist. Somit kann Material eingespart werden und eine Sitzbelegungserkennungsvorrichtung ist bei vorhandener Sitzheizung nachrüstbar.

In einer Ausführungsform ist dem Draht ein Schalter zugeordnet, insbesondere ein MOSFET-Schalter. Dieser Schalter kann den Stromfluss durch den Draht der Sitzheizung unterbrechen, wodurch der Draht zur Elektrode wird. Somit kann der Draht abwechselnd als Heizdraht und als Elektrode fungieren. Vorzugsweise handelt es sich bei dem Schalter um denjenigen, der die Sitzheizung aktiviert bzw. deaktiviert, sodass kein zusätzliches Bauteil notwendig ist.

Vorzugsweise weist die Elektronikbaugruppe einen konstanten Widerstand auf, insbesondere einen Dünnfilmwiderstand. Dieser Widerstand bietet den Vorteil, dass das elektrische Signal, welches vom Funktionsgenerator erzeugt wird, derart gedämpft wird, dass sich die Änderung des elektrischen Signals durch die Belegung der Sitzfläche und das Zuschalten des Kondensators verhältnismäßig stark auswirkt.

In einer besonders bevorzugten Ausführungsform sind wenigstens zwei Drähte, zwei Elektronikbaugruppen und zwei Sitzflächen vorgesehen, wobei jeweils ein Draht und eine Elektronikbaugruppe einer Sitzfläche zugeordnet sind. Dies bietet den Vorteil, dass zwei Sitzflächen unabhängig voneinander hinsichtlich ihrer Belegung überwacht werden können, beispielsweise bei einem Motorrad die Fahrer- und die Soziussitzfläche.

In einer weiteren Ausführungsform ist die Assistenzeinheit ein eCall-System.

Insbesondere umfasst die elektronische Steuerung eine Zeitmesseinrichtung, sodass die Assistenzeinheit verzögert aktivierbar ist. Durch die Verzögerung ist gewährleistet, dass die Assistenzeinheit nicht sofort ausgelöst wird, sondern eine gewisse Zeitdauer abgewartet wird. Somit kann beispielsweise bei einem Motorrad vermieden werden, dass die Notrufeinheit ausgelöst wird, wenn der Fahrer und/oder der Sozius kurzzeitig während der Fahrt aufstehen und sich aus dem Detektionsfeld der Sitzbelegungserkennungsvorrichtung bewegen.

Weitere Merkmale und Vorteile der Erfindungen ergeben sich aus der nachfolgenden Beschreibung und der nachfolgenden Zeichnung. In den Zeichnungen zeigen:
- Figur 1 eine schematische Übersicht eines erfindungsgemäßen Assistenzsystems mit einer Sitzbelegungserkennungsvorrichtung in einer ersten Ausführungsform, und
- Figur 2 eine schematische Übersicht eines erfindungsgemäßen Assistenzsystems mit einer Sitzbelegungserkennungsvorrichtung in einer zweiten Ausführungsform.

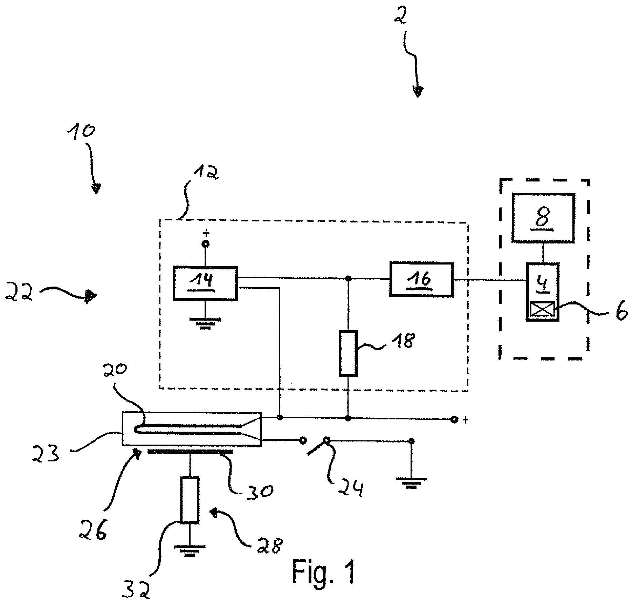

Figur 1 zeigt ein Assistenzsystem 2 für ein Motorrad, das eine elektronische Steuerung 4 aufweist, wobei die elektronische Steuerung 4 eine Zeitmesseinrichtung 6 umfasst. Ferner weist das Assistenzsystem 2 eine Assistenzeinheit 8 auf. Bei der Assistenzeinheit 8 kann es sich um eine Fahrwerksassistenzeinheit, insbesondere ESA-System, und/oder eine Notrufeinheit wie das eCall-System handeln.

Die Assistenzeinheit 8 wird von der elektronischen Steuerung 4 aktiviert, wobei dies in Abhängigkeit von einem empfangenen Signal einer mit der Steuerung 4 gekoppelten Sitzbelegungserkennungsvorrichtung 10 geschieht.

Die Sitzbelegungserkennungsvorrichtung 10 weist eine Elektronikbaugruppe 12 auf, die einen Funktionsgenerator 14, eine Auswerteeinheit 16 sowie einen konstanten Widerstand 18 umfasst, der als Dünnfilmwiderstand ausgeführt ist. Die Elektronikbaugruppe 12 ist Teil einer Sitzheizung 22.

Der Funktionsgenerator 14 ist ferner mit einem Draht 20 verbunden, der Teil einer Sitzheizung 22 ist. Der Draht 20 ist demnach ein Heizdraht und kann eine Sitzfläche 23 erwärmen, wenn ein entsprechender Strom durch den Draht 20 fließt.

Dem Draht 20 ist ein Schalter 24 zugeordnet, der vorzugsweise als MOSFET-Schalter ausgeführt ist, um schnelle Schaltzeiten zu garantieren. Der Schalter 24 kann dabei den Stromfluss durch den Draht 20 unterbrechen, der fließt, wenn die Sitzheizung 22 aktiviert ist. Demnach ist der Schalter 24 vorzugsweise derjenige, der die Sitzheizung 22 aktiviert bzw. deaktiviert.

Das Unterbrechen des Stromflusses durch den Draht 20 bewirkt, dass der Draht 20 zu einer Elektrode wird, wobei die Elektrode Teil eines Kondensators 26 ist, sofern die Sitzfläche 23 belegt ist. Der Kondensator 26 bildet sich demnach zwischen dem durch den Schalter 24 getrennten Draht 20 und einer auf der Sitzfläche 23 befindlichen Person 28, die die Gegenelektrode 30 bildet. Die Person 28 ist dabei mit der Masse des Kraftfahrzeugs verbunden, dem Bezugspotenzial. Die Person 28 bildet einen Widerstand 32, der jedoch keine Auswirkung auf die Funktionsweise der Sitzbelegungserkennungsvorrichtung 10 hat.

Unter anderem ist zur Steuerung des Schalters 24, der dem Draht 20 zugeordnet ist, die elektronische Steuerung 4 vorgesehen. Zudem steht die elektronische Steuerung 4 mit der Auswerteeinheit 16 der Elektronikbaugruppe 12 in Verbindung und erhält von dieser die Auswertung der elektrischen Signale der Sitzbelegungserkennungsvorrichtung 10. Die der elektronischen Steuerung 4 zugeordnete Zeitmesseinrichtung 6 erfasst dabei unter anderem die Zeit, die seit dem Signaleingang vergangen ist und verzögert die Aktivierung der Assistenzeinheit 8 durch die elektronische Steuerung 4 entsprechend.

Das von dem Funktionsgenerator 14 erzeugte elektrische Signal wird über den Widerstand 18 gedämpft, sodass Änderungen durch den zuschaltbaren Kondensator 26 verhältnismäßig stark ausfallen. In der Auswerteeinheit 16 ist ein Schwellwert hinterlegt, der über- oder unterschritten wird, wenn der Kondensator 26 dem Stromkreis zugeschaltet ist oder nicht und die Person 28 sich auf der Sitzfläche 23 befindet.

Bei dem elektrischen Signal, das von dem Funktionsgenerator 14 erzeugt wird, kann es sich beispielsweise um einen Wechselstrom handeln, der mit einer niedrigen Frequenz erzeugt wird und sich entsprechend durch Zuschalten des Kondensators 26 verringert, da der Kondensator 26 als frequenzabhängiger Widerstand fungiert. Alternativ kann es sich bei dem elektrischen Signal auch um ein Wechselspannung- bzw. Wechselstromsignal handeln, deren Phasen sich durch Zuschalten des Kondensators 26 entsprechend zueinander verschieben. Weitere elektrische Signale, die von einem Kondensator entsprechend beeinflusst werden, können ebenfalls genutzt und von dem Funktionsgenerator 14 erzeugt werden.

Die Funktionsweise der Sitzbelegungserkennungsvorrichtung 10 ist dabei wie folgt:
Bei deaktivierter Sitzheizung 22 ist der Schalter 24 in der in Figur 1 gezeigten offenen Stellung, wodurch der Draht 20 als Elektrode fungiert.

Der Funktionsgenerator 14 erzeugt ein elektrisches Signal, welches sich aufgrund der Belegung der Sitzfläche 23 durch die Person 28 und dem damit verbundenen Zuschalten des Kondensators 26 in den elektrischen Stromkreis entsprechend verändert. Der Kondensator 26 ist dabei, wie bereits oben erwähnt, durch den als Elektrode fungierenden Draht 20 und die Gegenelektrode 30 in Form der mit der Masse des Fahrzeugs verbundenen Person 28 gebildet.

Das durch den Kondensator 26 veränderte elektrische Signal wird von der Auswerteeinheit 16 entsprechend erfasst, sodass die elektronische Steuerung 4 ein Signal erhält, dass die Sitzfläche 23 durch eine Person 28 belegt ist. Die elektronische Steuerung 4 steuert die Assistenzeinheit 8 an.

Sollte sich nun die Person 28 während der Fahrt von der Sitzfläche 23 lösen, so ist kein Kondensator 26 mehr in dem Stromkreis vorhanden, der das elektrische Signal verändert, welches vom Funktionsgenerator 14 erzeugt worden ist. Dadurch über- oder unterschreitet das vom Funktionsgenerator 14 erzeugte Signal den in der Auswerteeinheit 16 hinterlegten Schwellwert, und die Auswerteeinheit 16 erkennt, dass die Person 28 die Sitzfläche 23 verlassen hat.

In dem oben genannten Fall, in dem sich die Person 28 während der Fahrt von der Sitzfläche 23 löst, aktiviert die elektronische Steuerung 4 die Assistenzeinheit 8, beispielsweise eine Notrufeinheit, aufgrund des von der Auswerteeinheit 16 empfangenen Signals. Die Aktivierung der Assistenzeinheit 8 wird in diesem Fall jedoch von der Zeitmesseinrichtung 6 verzögert, da es vorkommen kann, dass sich die Person 28 kurzzeitig von der Sitzfläche 23 löst bzw. sich aus dem Detektionsfeld der Elektrode bewegt, beispielsweise wenn die Person 28 während der Fahrt aufsteht. Somit ist gewährleistet, dass die Notrufeinheit nicht unnötig ausgelöst wird.

Die Sitzbelegungserkennungsvorrichtung 10 ist ebenfalls bei eingeschalteter Sitzheizung 22 funktionstüchtig. Bei generell aktivierter Sitzheizung 22 ist der Schalter 24 geschlossen, sodass der Draht 20 mit einem Strom beaufschlagt wird, wodurch sich der Draht 20 erhitzt und die Sitzfläche 23 erwärmt. Bei geschlossenem Schalter 24 kann der Draht 20 jedoch nicht als Elektrode des Kondensators 26 fungieren.

Die elektronische Steuerung 4 steuert daher bei aktivierter Sitzheizung 22 den Schalter 24 derart, dass dieser kurzzeitig in seine offene, den Stromfluss unterbrechende Stellung übergeht. In diesem Zeitraum, wenn der Schalter 24 geöffnet ist, fungiert der Draht 20 analog zu dem obigen Verfahren als Elektrode für den Kondensator 26. In diesem Zeitraum kann somit die Belegung der Sitzfläche 23 durch die Person 28 erfasst werden, wie dies bereits beschrieben worden ist.

Vorzugsweise befindet sich der Schalter 24 in seiner stromunterbrechenden Stellung für die Zeitdauer, die die Auswerteeinheit 16 benötigt, um das elektrische Signal des Funktionsgenerators 14 zu erfassen und zu verarbeiten.

Nachdem die Auswerteeinheit 16 das elektrische Signal erkannt und verarbeitet hat, wird der Schalter 24 von der elektronischen Steuerung 4 in seine stromführende Stellung zurückgesteuert, sodass der Draht 20 als Heizdraht fungiert, da wieder Strom durch ihn fließt, der zur Erwärmung des Drahts 20 und der Sitzfläche 23 führt.

Dieses Ein- und Ausschalten des Schalters 24 erfolgt dabei vorzugsweise periodisch und in Zeitabständen, die eine ausreichende Heizfunktion der Sitzheizung 22 gewährleisten. Somit ist trotz aktivierter Sitzheizung 22 eine Sitzbelegungserkennung möglich, die mit denselben Bauteilen erreicht wird.

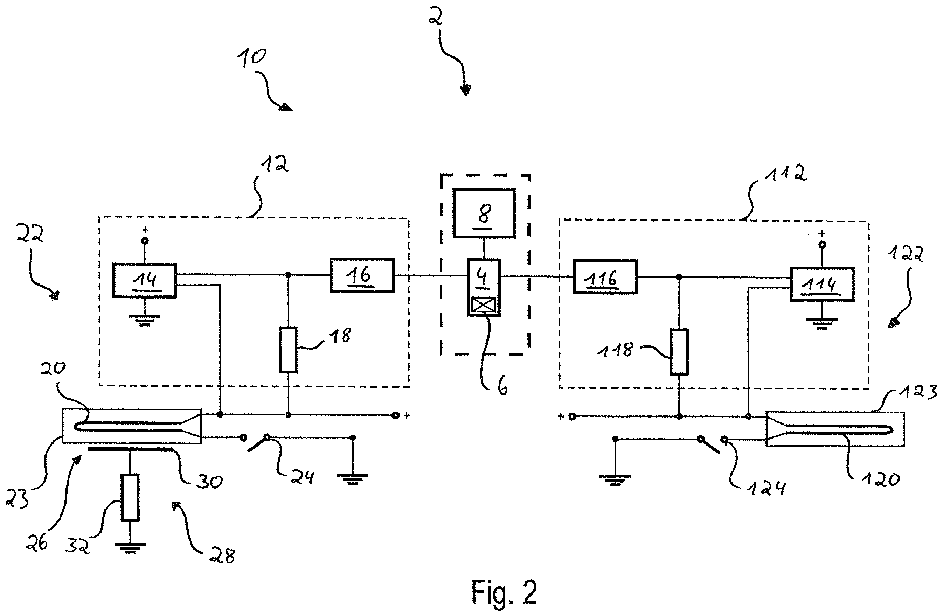

Figur 2 zeigt eine zweite Ausführungsform des Assistenzsystems 2, wobei die Sitzbelegungserkennungsvorrichtung 10 als eine Erweiterung der aus Figur 1 bekannten Sitzbelegungserkennungsvorrichtung 10 angesehen werden kann, da diese zwei Sitzflächen 23 und 123 zugeordnet ist. Beispielsweise handelt es sich bei der ersten Sitzfläche 23 um die Fahrersitzfläche und bei der zweiten Sitzfläche 123 um die Soziussitzfläche eines Motorrads. Für die aus Figur 1 bekannten Bauteile werden dieselben Bezugszeichen verwendet, wobei baugleiche und funktionsgleiche Bauteile, die der Soziussitzfläche 123 zugeordnet sind, entsprechend um 100 erhöht sind.

In der gezeigten Figur 2 befindet sich nur ein Fahrer 28 auf der Fahrersitzfläche 23 wohingegen die Soziussitzfläche 123 nicht belegt ist.

Beiden Sitzflächen 23, 123 ist jeweils eine Elektronikbaugruppe 12, 112 zugeordnet, die gleich ausgebildet sind und jeweils einen Funktionsgenerator 14, 114, eine Auswerteeinheit 16, 116 sowie einen Widerstand 18, 118 aufweisen.

Ein Draht 120 ist analog zu der in Figur 1 beschriebenen Ausführung vorgesehen, der einerseits als Elektrode eines Kondensators und als Heizdraht fungieren kann, wodurch der Draht 120 ebenfalls Teil einer Sitzheizung 122 ist, die der Sitzfläche 123 des Sozius zugeordnet ist. Der Stromfluss durch den Draht 120 kann über einen Schalter 124 unterbrochen werden, sodass der Draht 120 analog zu der Ausführungsform in Figur 1 trotz aktivierter Sitzheizung 122 auch als Elektrode für einen zweiten Kondensator der Sitzbelegungserkennungsvorrichtung 10 fungieren kann. Der zweite Kondensator ergibt sich bei Belegung der Soziussitzfläche 123 durch einen Sozius.

Die beiden Auswerteeinheiten 16, 116 sind mit derselben elektronischen Steuerung 4 verbunden, die Teil des Assistenzsystems 2 ist und entsprechend die Assistenzeinheit 8 aktiviert, deaktiviert bzw. einstellt.

Bei der Assistenzeinheit 8 handelt es sich beispielsweise um eine Fahrwerksassistenzeinheit, insbesondere ESA-System, die das Fahrwerk des Motorrads entsprechend der Belegung der Sitzfläche 23 und der Soziussitzfläche 123 einstellt, sodass das Fahrwerk auf die Belegung durch eine Person 28 oder zwei Personen eingestellt wird.

## Patentansprüche

1. Assistenzsystem (2) für ein Motorrad, mit einer Sitzbelegungserkennungsvorrichtung (10), mit
wenigstens einer Elektrode eines Kondensators (26), die in einer Sitzfläche (23) angeordnet und als Draht (20) ausgeführt ist,
einer mit dem Draht (20) verbundenen Elektronikbaugruppe (12), die einen Funktionsgenerator (14) zur Erzeugung eines elektrischen Signals und eine Auswerteeinheit (16) aufweist,
wobei das vom Funktionsgenerator (14) erzeugte elektrische Signal durch Belegung der Sitzfläche (23) veränderbar ist, wobei der Draht (20) Teil einer Sitzheizung (22) ist und der Draht (20) ein Heizdraht ist, wobei der Draht (20) abwechselnd mit einem Heizstrom beaufschlagt ist und als Elektrode des Kondensators (26) fungiert, **dadurch gekennzeichnet, dass** eine elektronische Steuerung (4) vorgesehen ist, die aus elektrischen Signalen der Sitzbelegungserkennungsvorrichtung (10) ermittelt, ob die Sitzfläche (23) belegt ist, wobei die elektronische Steuerung (4) abhängig von der Belegung der Sitzfläche (23) eine Assistenzeinheit (8) aktiviert oder deaktiviert, wobei die Assistenzeinheit (4) eine Fahrwerksassistenzeinheit und/oder eine Notrufeinheit ist.

2. Assistenzsystem (2) nach Anspruch 1, **dadurch gekennzeichnet, dass** die Elektronikbaugruppe (12) Teil der Sitzheizung (22) ist.

3. Assistenzsystem (2) nach Anspruch 1 oder 2, **dadurch gekennzeichnet, dass** der Draht (20) periodisch abwechselnd mit einem Heizstrom beaufschlagt ist und als Elektrode des Kondensators (26) fungiert,

4. Assistenzsystem (2) nach einem der vorhergehenden Ansprüche, **dadurch gekennzeichnet, dass** dem Draht (20) ein Schalter (24) zugeordnet ist, insbesondere ein MOSFET-Schalter.

5. Assistenzsystem (2) nach einem der vorhergehenden Ansprüche, **dadurch gekennzeichnet, dass** die Elektronikbaugruppe (12) einen konstanten Widerstand (18) aufweist, insbesondere einen Dünnfilmwiderstand.

6. Assistenzsystem (2) nach einem der vorhergehenden Ansprüche, **dadurch gekennzeichnet, dass** wenigstens zwei Drähte (20, 120), zwei Elektronikbaugruppen (12, 112) und zwei Sitzflächen (23, 123) vorgesehen sind, wobei jeweils ein Draht (20, 120) und eine Elektronikbaugruppe (12, 112) einer Sitzfläche (23, 123) zugeordnet sind zur unabhängigen Ermittlung der Sitzbelegung jeder Sitzfläche.

7. Assistenzsystem (2) nach einem der vorhergehenden Ansprüche, **dadurch gekennzeichnet, dass** die Assistenzeinheit (8) ein eCall-System ist.

8. Assistenzsystem (2) nach einem der vorhergehenden Ansprüche, **dadurch gekennzeichnet, dass** die elektronische Steuerung (4) eine Zeitmesseinrichtung (6) umfasst, sodass die Assistenzeinheit (8) abhängig von den erhaltenen Signalen der Sitzbelegungserkennungsvorrichtung (10) verzögert aktivierbar ist.

## Claims

1. An assistance system (2) for a motorcycle, with a seat-occupancy recognition device (10), having
at least one electrode of a capacitor (26) which is arranged in a seat surface (23) and is embodied as a wire (20),
an electronic module (12) connected to the wire (20), which module has a function generator (14) for generating an electrical signal, and an evaluation unit (16),
wherein the electrical signal generated by the function generator (14) can be changed by occupancy of the seat surface (23), wherein the wire (20) is part of a seat heating means (22) and the wire (20) is a heating wire, wherein the wire (20) alternately is supplied with a heating current and functions as an electrode of the capacitor (26), **characterised in that** an electronic control means (4) is provided which ascertains from electrical signals of the seat-occupancy recognition device (10) whether the seat surface (23) is occupied, with the electronic control means (4) activating or deactivating an assistance unit (8) dependent on the occupancy of the seat surface (23), wherein the assistance unit (4) is a chassis assistance unit and/or an emergency call unit.

2. An assistance system (2) according to Claim 1, **characterised in that** the electronic module (12) is part of the seat heating means (22).

3. An assistance system (2) according to Claim 1 or Claim 2, **characterised in that** the wire (20) periodically alternately is supplied with a heating current and functions as an electrode of the capacitor (26).

4. An assistance system (2) according to one of the preceding claims, **characterised in that** a switch (24), especially a MOSFET switch, is associated with the wire (20).

5. An assistance system (2) according to one of the preceding claims, **characterised in that** the electronic module (12) has a constant resistor (18), epecially a thin-film resistor.

6. An assistance system (2) according to one of the preceding claims, **characterised in that** at least two wires (20, 120), two electronic modules (12, 112) and two seat surfaces (23, 123) are provided, with in each case one wire (20, 120) and one electronic module (12, 112) being associated with a seat surface (23, 123) for independently ascertaining the seat occupancy of each seat surface.

7. An assistance system (2) according to one of the preceding claims, **characterised in that** the assistance unit (8) is an eCall system.

8. An assistance system (2) according to one of the preceding claims, **characterised in that** the electronic control means (4) comprises a time measurement means (6), so that the assistance unit (8) can be activated with a delay, dependent on the signals of the seat-occupancy recognition device (10) which are received.

## Revendications

1. Système d'assistance (2) destiné à une moto comprenant un dispositif d'identification d'occupation de siège (10) comportant :
au moins une électrode d'un condensateur (26) qui est montée dans une surface de siège (23) et est réalisée sous la forme d'un fil (20),
un ensemble électronique (12) relié au fil (20) et qui comporte un générateur fonctionnel (14) permettant de produire un signal électrique et une unité d'exploitation (16),
le signal électrique produit par le générateur fonctionnel (14) pouvant être modifié par l'occupation de la surface du siège (23),
le fil (20) étant une partie d'un chauffage de siège (22) et étant un fil chauffant, ce fil (20) étant en alternance alimenté par un courant de chauffage et fonctionnant en tant qu'électrode du condensateur (26),
**caractérisé en ce qu'**
il est prévu une commande électronique (4) qui détecte, à partir des signaux électriques du dispositif d'identification d'occupation de siège (10) si la surface du siège (23) est occupée, la commande électronique (4) activant ou désactivant une unité d'assistance (8) en fonction de l'occupation de la surface du siège (23), et l'unité d'assistance (4) étant une unité d'assistance du mécanisme de roulement et/ou une unité d'appel de détresse.

2. Système d'assistance (2) conforme à la revendication 1,
**caractérisé en ce que**
l'ensemble électronique (12) est une partie du chauffage du siège (22).

3. Système d'assistance (2) conforme à la revendication 1 ou 2,
**caractérisé en ce que**
le fil (20) est en alternance périodiquement alimenté avec un courant de chauffage et fonctionne en tant qu'électrode du condensateur (26).

4. Système d'assistance (2) conforme à l'une des revendications précédentes,
**caractérisé en ce qu'**
au fil (20) est associé un commutateur (24), en particulier un commutateur MOSFET.

5. Système d'assistance (2) conforme à l'une des revendications précédentes,
**caractérisé en ce que**
l'ensemble électronique (12) a une résistance constante (18), en particulier une résistance à film mince.

6. Système d'assistance (2) conforme à l'une des revendications précédentes,
**caractérisé en ce qu'**
il est prévu au moins deux fils (20, 120), deux ensembles électroniques (12, 112) et deux surfaces de siège (23, 123), un fil (20, 120) et un fil et un ensemble électronique (12, 112) sont respectivement associés à une surface de siège (23, 123) pour permettre de déterminer indépendamment l'occupation de chaque surface de siège.

7. Système d'assistance (2) conforme à l'une des revendications précédentes,
**caractérisé en ce que**
l'unité d'assistance (8) est un système eCall.

8. Système d'assistance (2) conforme à l'une des revendications précédentes,
**caractérisé en ce que**
la commande électronique (4) comporte un dispositif de mesure de temps (6), de sorte que l'unité d'assistance (8) puisse être activée de manière temporisée en fonction des signaux obtenus à partir du dispositif d'identification d'occupation du siège (10).
